(19)

Europäisches
Patentamt
European
Patent Office
Office européen
des brevets

(11) **EP 1 627 343 B1**

(12) **EUROPÄISCHE PATENTSCHRIFT**

(45) Veröffentlichungstag und Bekanntmachung des
Hinweises auf die Patenterteilung:
**10.10.2007 Patentblatt 2007/41**

(21) Anmeldenummer: 03737881.7

(22) Anmeldetag: **14.05.2003**

(51) Int Cl.:
***G06K 9/00*** *(2006.01)*

(86) Internationale Anmeldenummer:
**PCT/DE2003/001556**

(87) Internationale Veröffentlichungsnummer:
**WO 2004/104906 (02.12.2004 Gazette 2004/49)**

(54) **VERFAHREN UND VORRICHTUNG ZUR ERKENNUNG BIOMETRISCHER DATEN NACH AUFNAHME AUS MINDESTENS ZWEI RICHTUNGEN**

METHOD AND DEVICE FOR THE RECOGNITION OF BIOMETRIC DATA FOLLOWING RECORDING FROM AT LEAST TWO DIRECTIONS

PROCEDE ET DISPOSITIF DE RECONNAISSANCE DE DONNEES BIOMETRIQUES APRES ENREGISTREMENT A PARTIR D'AU MOINS DEUX DIRECTIONS

(84) Benannte Vertragsstaaten:
**AT BE BG CH CY CZ DE DK EE ES FI FR GB GR
HU IE IT LI LU MC NL PT RO SE SI SK TR**

(43) Veröffentlichungstag der Anmeldung:
**22.02.2006 Patentblatt 2006/08**

(73) Patentinhaber: **TBS Holding AG
8808 Pfäffikon (CH)**

(72) Erfinder:
• **HAUKE, Rudolf
89168 Niederstotzingen (DE)**
• **MERBACH, Peter-Michael
98544 Zella-Mehlis (DE)**
• **NOTHAFT, Hans-Peter
89233 Neu-Ulm (DE)**

(74) Vertreter: **Liedtke, Klaus
Liedtke & Partner
Patentanwälte
Elisabethstrasse 10
99096 Erfurt (DE)**

(56) Entgegenhaltungen:
WO-A-01/59708          WO-A-98/37507
DE-A- 10 123 561       DE-A- 10 128 717

• **YOKOYAMA A ET AL: "Realtime range imaging using adjustment-free photo-VLSI-silicon range finder" INTELLIGENT ROBOTS AND SYSTEMS '94. 'ADVANCED ROBOTIC SYSTEMS AND THE REAL WORLD', IROS '94. PROCEEDINGS OF THE IEEE/RSJ/GI INTERNATIONAL CONFERENCE ON MUNICH, GERMANY 12-16 SEPT. 1994, NEW YORK, NY, USA,IEEE, 12. September 1994 (1994-09-12), Seiten 1751-1758, XP010142066 ISBN: 0-7803-1933-8**
• **SARRIS N ET AL: "Three dimensional facial model adaptation" PROCEEDINGS 2000 INTERNATIONAL CONFERENCE ON IMAGE PROCESSING (CAT. NO.00CH37101), PROCEEDINGS OF 7TH IEEE INTERNATIONAL CONFERENCE O IMAGE PROCESSING, VANCOUVER, BC, CANADA, 10-13 SEPT. 2000, Bd. 2, 10. September 2000 (2000-09-10), Seiten 219-222, XP010529963**

EP 1 627 343 B1

**Beschreibung**

Die Erfindung betrifft ein Verfahren und eine Vorrichtung zur Erkennung biometrischer Daten mit hoher Fälschungssicherheit, insbesondere zur Erkennung von Finger- und Gesichtsmerkmalen, wobei ein Objekt durch optische Abtastung erfasst wird und mittels digitaler Bildverarbeitung numerische Kennwerte ermittelt werden.

In vielfältigen Anwendungen werden Sicherheitssysteme angewendet um unbefugten Personen den Zugang zu bestimmten Bereichen zu verwehren. Solche Bereiche sind beispielsweise Geldautomaten, geheim zu haltende Laborräumlichkeiten und dergleichen. Diese Systeme verwenden hauptsächlich Einrichtungen zur Fingerabdruck- und Gesichtserkennung.

Es bestehen umfangreiche Versuche, diese Systeme zu überwinden. Zur Erhöhung der Sicherheit werden zusätzliche Mittel eingesetzt, mit denen überprüft wird, ob es sich um ein lebendes Objekt handelt.

Im Stand der Technik sind Systeme bekannt, die Lebendfunktionen der Objekte durch Ermittlung von Sauerstoffsättigung, Blutpuls oder anderer Parameter festzustellen, um damit Fälschungen zu erkennen.

In EP 0 359 554 B1 ist eine Anordnung zur Bestimmung von Fingerabdrücken beschrieben, mit der Zonen des Fingers auf einen Lichtempfänger abgebildet 7 werden. Die Anordnung verfügt über eine Lichtquelle, Mittel zum Führen der von der Lichtquelle auf die Oberfläche des zu detektierenden Fingers verlaufenden Lichtstrahlen, ein optisches Abbildungssystem, welches von einem bestrahlten Teil der Probe ein Bild erzeugt, einer Lichtdetektoreinrichtung zum Detektieren des Bildes und eine Einrichtung zur Ausgabe eines Detektionssignals. Mit der Anordnung soll bestimmt werden, ob die Probe ein biologisches Objekt oder eine Nachbildung ist.

Hierzu ist der Lichtdetektor mit einer Lichtempfängerfläche versehen, die in eine Vielzahl von Zonen geteilt ist, so dass ein Bild des bestrahlten Teils auf der Lichtempfängerfläche erzeugt wird. Der Lichtdetektor verfügt über getrennte optische Ausgänge für die jeweils von einer Vielzahl von Zonen empfangenen Lichtstrahlen.

Die Unterscheidung, ob es sich um ein authentisches Objekt, also einen lebenden Finger, oder um ein Nachbildung handelt, erfolgt durch Auswertung des Lichtverlaufes, wobei die Erscheinung ausgenutzt wird, dass sich bei einem authentischen Finger und bei einer Nachbildung unterschiedliche Lichtverläufe ergeben.

Häufig werden Fälschungen durch das Aufbringen von Masken auf lebende Objekte begangen. Insbesondere bei Fingerabdruckerkennungssystemen wird versucht, durch das Aufbringen einer dünnen Latex- oder Gelatineschicht, auf der sich Abdrücke von Hautleisten einer anderen Person befinden, unberechtigt Zugang zu gesicherten Bereichen zu erlangen.

Bei der in EP 0 359 554 B1 beschriebenen Anordnung ist nachteilig, dass folienartige Nachbildungen nicht erkannt werden.

Ferner ist in EP 1 073 988 B1 ein System zur Hand- und Fingerlinien-Erkennung beschrieben, das zur Identifizierung von Personen dient. Mit diesem System werden unter Verzicht auf mechanische Bewegungen der Anordnung durch Verwendung einer Lichtquelle, eines Polarisationsfilters und einer Kamera Hand- und/oder Fingerlinien, Muster von Papillarleisten, Muster der Unterhaut oder dergleichen optisch berührungslos zur Aufnahme eines Bildes erfasst. Die optische Erfassung erfolgt mittels im Beleuchtungsstrahlengang sowie im Abbildungsstrahlengang angeordneter Polarisationsfilter und einer starr angeordneten Kamera.

Die DE-A-101 23 561 offenbart ein Verfahren zum Erkennen von Fingermerkmalen von Personen, bei dem die Fingerkuppe durch Aufnahme von zwei Richtungen räumlich erfasst und ein entsprechendes Modell gebildet wird, so dass der Benutzer sowohl über die Papillarlinien als auch über die Form des Fingers identifiziert werden kannn.

Die DE-A-101 28 717 lehrt die Detektion natürlicher Haut durch Beleuchtung im sichtbaren und infraroten Spektralbereich (um 600 nm und um 800 nm) und die Auswertung des reflektierten Lichts.

Der Erfindung liegt die Aufgabe zugrunde, ein Verfahren und eine Vorrichtung der eingangs genannten Art anzugeben, mit denen eine hohe Fälschungssicherheit erreicht wird. Die Erfindung soll modular an bestehenden Erkennungsverfahren einsetzbar sein und auch Fälschungen sicher erkennen, die durch das Aufbringen von Masken auf die zu erkennenden Objekte erzeugt werden.

Erfindungsgemäß wird die Aufgabe mit einem Verfahren, welches die in Anspruch 1 angegebenen Merkmale und mit einer Vorrichtung, welche die in Anspruch 12 angegebenen Merkmale enthält, gelöst.

Vorteilhafte Ausgestaltungen sind in den Unteransprüchen angegeben.

Bei dem erfindungsgemäßen Verfahren wird das Objekt gleichzeitig aus mindestens zwei verschiedenen Aufnahmerichtungen erfasst und aus

mindestens zwei Abbildungen ein dreidimensionales Modell des betrachteten Objektes errechnet, das mit einem aus ebenfalls mehreren Abbildungen gewonnenem Referenzmodell verglichen wird. Das Objekt wird dann als richtig identifiziert, wenn gleichzeitig die aus den beiden Abbildungen gewonnenen Daten bis auf jeweils vorherbestimmte Toleranzen mit den Daten des Referenzmodells übereinstimmen.

Unter gleichzeitig soll dabei verstanden werden, dass die beiden Abbildungen innerhalb eines Zeitraumes von höchstens 0,1 s gewonnen werden, so dass eine Manipulation durch Austausch oder Veränderung des Objektes ausgeschlossen werden kann.

Vorzugsweise bilden die Aufnahmerichtungen, aus denen das Objekt betrachtet wird, einen Winkel von 90 Grad und liegen in einer Ebene. Dabei kann das abzubildende Objekt auf einer ebenen Fläche eines optischen Sensors aufliegen oder berührungslos abgetastet werden.

Das erfindungsgemäße Verfahren erkennt mit hoher Sicherheit Fälschungen an Kontrollstellen, an denen personenbezogene Objekte wie Finger oder Gesichter kontrolliert werden. Die Prüfung erfolgt durch einen Vergleich von Datensätzen von aus mindestens zwei gleichzeitig aufgenommenen Abbildungen des zu untersuchenden Prüfobjektes mit dem Datensatz eines gespeicherten dreidimensionalen Referenzobjektes.

Bei Kontrollen, die Merkmale eines Fingers auswerten, werden Fälschungen üblicherweise dadurch erzeugt, dass sich ein Unberechtigter von einer berechtigten Person einen Fingerabdruck beschafft, diesen auf eine maskenförmige Nachbildung überträgt und die Maske in Form einer dünnen Folie über den Finger zieht. Da derartig gefälschte Fingerabdrücke immer nur eine Teilfläche des Fingers erfassen, ist es deshalb für den Unberechtigten kaum möglich, der Sicherheitskontrolle gleichzeitig zwei Bilder von unterschiedlichen Bereichen des Originalfingers, die bei der Kontrolle abgefragt werden, zu präsentieren und damit die dreidimensionale Kontur zu erfassen und nachzubilden. Dies ist darin begründet, dass in der Regel nur latente Abdrücke, also zweidimensionale Informationen hinterlassen werden. Derartige Informationen können Fingerabdrücke oder Bilder des Objektes, vorzugsweise von Gesicht oder Finger, sein, die nur eine zweidimensionale Information enthalten, so dass der Unberechtigte aus einer oder mehreren zweidimensionalen Informationen exakt das abgespeicherte dreidimensionale Referenzmodel nachbilden müsste. Es ist auch sehr unwahrscheinlich, dass eine unberechtigte Person, die eine Maske über ihren Finger streift, in der räumlichen Struktur mit dem Finger der zu imitierenden Person übereinstimmt.

Für den Unberechtigten ist es somit unmöglich, diese für die Übereinstimmungen der dreidimensionalen Modelle erforderlichen Bedingungen herbeizuführen.

Eine vorteilhafte Ausgestaltung der Erfindung ergibt sich dadurch, dass zur Charakterisierung des Objektes ein Bild verwendet wird, welches nicht alle aus den Minutien der Fingerlinien abgeleiteten Daten, sondern nur charakteristische Profildaten ermittelt und verwendet. Diese Datenstrukturen sind besonders geeignet, Indizes für Datenbanken zu bilden, und ermöglichen es damit, die Identifizierung einer Person aus einer großen Anzahl von Personen erheblich zu beschleunigen.

Da damit eine geringere Datenmenge zur Überprüfung erforderlich ist, kann die Geschwindigkeit der Überprüfung einer Person deutlich erhöht werden, was insbesondere in Fällen, in denen zur Überprüfung des Einlasses einer Person viele Datensätze abgefragt werden müssen, was beispielsweise dann der Fall ist, wenn viele Personen zum Zutritt berechtigt sind, so dass für die Zutrittskontrolle einer Person eine Vielzahl von Referenzdatensätzen abgefragt werden müssen.

Als aussagekräftige Daten sind beispielsweise geeignet

die Breite und Länge von Fingergliedern,
die Projektionsfläche des Gliedes oder
Koeffizienten der Art b/l oder F/l bzw F/b oder F/bl.

Eine zweckmäßige Ausführung ergibt sich dadurch, dass mit einer zweidimensionalen Profilfunktion mit Werten der Art $(h(x), t(x))$ zusätzliche biometrische Merkmale, zum Beispiel eine Nagelbettbeschreibung, erfasst werden.

Eine weitere vorteilhafte Ausgestaltung sieht vor, dass auf das Objekt ein Lichtspalt oder -raster projiziert wird, so dass der projizierte Spalt auf der räumlichen Oberfläche des Objektes eine Kontur bildet, dessen Abbildung eine Aussage über die dreidimensionale Form des Objektes ermöglicht, wobei die Beleuchtung des Lichtspaltes oder -rasters mit Licht einer Wellenlänge erfolgt, die von der Wellenlänge, welche zur Beleuchtung der Hauptabbildung verwendet wird, verschieden ist, und das Bild des Rasters oder Lichtspaltes aufgrund der anderen Lichtfarbe mit einer zweiten Kamera selektiv erfasst wird. Die Kennzeichnung der Kontur eines Teilbereiches des Objektes dient dann als weiterer Parameter für die Erkennung der Übereinstimmung des Objektes mit dem Referenzobjekt.

Um eine Umgehung der Überprüfung für Fälle, in denen es einem Angreifer dennoch gelingen sollte, diese Erkennungsmethoden durch eine Kunstfinger oder ein künstliches Gesicht mit dreidimensional identischen geometrischen Merkmalen zu überwinden, auszuschließen, findet zusätzliche Maßnahme eine spektroskopische und/oder streulichtspektroskopische Auswertung statt, indem ein lateral von einer Lichtquelle ausgehender Beleuchtungsstrahl auf den Fingerabschnitt gerichtet wird und der reflektierte Anteil und der transmissive Anteil spektroskopisch und/oder streulichtspektroskopisch mittels geeigneter Detektoren ausgewertet werden. Vorteilhaft ist es hierbei, Lichtwellenlängen von ca. 678 nm und 808 nm zu verwenden, weil sich die Intensitäten dieser beiden Wellenlängen in Transmission bzw. Reflexion lebenden Objekten wegen der unterschiedlichen Extinktionskoeffizienten von Hämoglobin und Oxyhämoglobin deutlich unterscheiden.

Damit können künstliche, nicht lebende Objekte mit höchster Sicherheit erkannt werden.

In der praktischen Anwendung wird der Finger von einer ringförmigen, kreuzförmigen oder paarweisen Anordnung von Lichtquellen einer definierten Wellenlänge mit dem Lichtempfängerarray als Zentrum beleuchtet. Zunächst werden die Orte der maximalen Intensität P($\lambda$i, max) festgestellt. Ausgewertet wird nur die Intensität des rückdiffundierten Lichts im Mittelpunkt der Orte maximaler Intensität $P_z$($\lambda$i, max). Damit erfolgt die Messung an einem definierten Ort. Vorteilhaft ist dabei, dass bei der Messung des aufsummierten rückgestreuten Signals das Signal/Rauschverhältnis verbessert wird.

Die Fälschungssicherheit ist um so besser, je mehr Spektrallinien zur Beleuchtung des Fingers verwendet werden, da sich über die zusätzlichen Unterscheidungsmerkmale eine Erhöhung der Fälschungssicherheit ergibt.

Da die Absorption von Licht in sauerstoffreichem Blut sich von derjenigen in sauerstoffarmem Blut unterscheidet, können insbesondere zur Erkennung lebender Objekte Lichtquellen verwendet werden, die Licht mit Wellenlängen von ca. $\lambda_1$ = 678 nm und ca. $\lambda_2$ = 835 nm ausstrahlen. Die Lichtwellenlänge 678 nm weist die größte Empfindlichkeit zur Erkennung des Unterschiedes zwischen sauerstoffreichem und sauerstoffarmem Blut auf, was beispielsweise zum Nachweis genutzt werden kann, dass es sich um ein lebendes Objekt handelt. Demgegenüber ist bei Beleuchtung der Objekte mit Licht einer Wellenlänge von ca. 835 nm kein Unterschied zwischen einem lebenden und einem künstlichen Objekt festzustellen.

Eine zur Anwendung des Verfahrens geeignete Anordnung sieht vor, eine oder mehrere Lichtquellen ringförmig oder zumindest paarweise so anzuordnen, dass das zu untersuchende Objekt punktförmig beleuchtet wird. Die Beleuchtung kann entweder unmittelbar oder mit Hilfe eines abbildenden optischen System erfolgen. Die rückgestreute Intensitätsverteilung wird mit einem Lichtempfängerarray erfasst.

Die Nachweissicherheit kann weiter dadurch verbessert werden, dass die Lichtquellen puls-kodiert geschaltet werden und synchron dazu die Auswertung mit einer CMOS-Kamera erfolgt.

Die Erfindung wird im Folgenden anhand von Ausführungsbeispielen näher erläutert.

In den zugehörigen Zeichnungen zeigen:

Figur 1        eine schematische Darstellung einer Anordnung mit zwei Detektoren,

Figur 2        Beispiele für Abbildungen eines Finger-Abschnittes,

Figur 3        eine schematische Darstellung der Auswertung von Hautlinien eines Fingers,

Figur 4        charakterisierende geometrische Größen eines Fingerabschnittes,

Figur 5        Koordinaten zur Charakterisierung des Fingerabschnittes,

Figur 6        eine schematische Darstellung einer Anordnung zur Streulichtauswertung,

Figur 7        eine Anordnung zur Lagefixierung einer Hand,

Figur 8        Merkmale eines menschlichen Ohres,

Figur 9        die Vorderansicht einer Anordnung mit zusätzlicher punktförmiger Beleuchtung eines Fingerabschnittes,

Figur 10       die Draufsicht auf die in Figur 8 gezeigte Anordnung
und

Figur 11       den Intensitätsverlauf der Helligkeit punktförmig beleuchteter Fingerabschnitte.

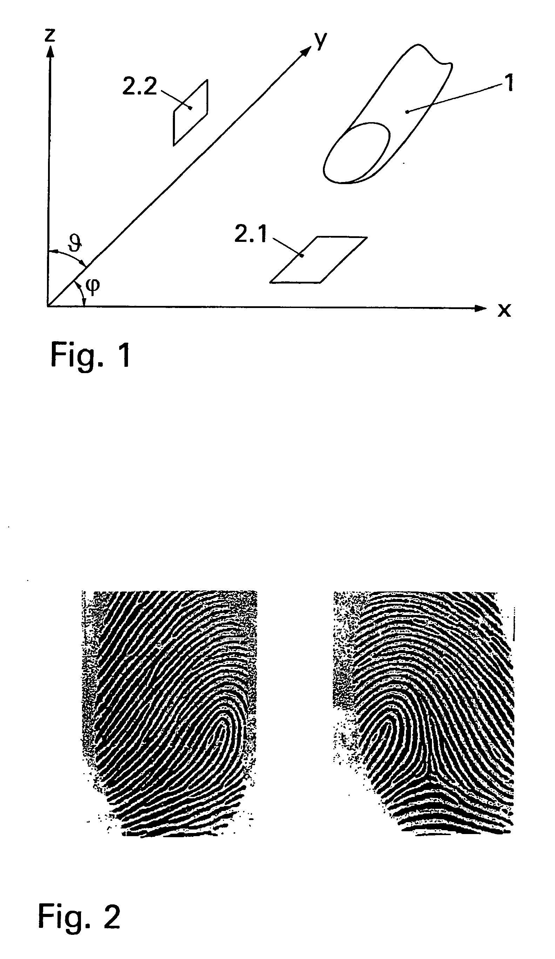

**Figur 1** erläutert die grundsätzliche Funktionsweise einer Einrichtung zur fälschungssicheren Prüfung durch die gleichzeitige Erfassung von zwei aus verschiedenen Richtungen ermittelten Teilbildern des Fingers 1. Die Lage des Fingers ist in einem kartesischen Koordinatensystem mit den Koordinaten x, y, z definiert. Wie in dieser Abbildung gezeigt, wird zusätzlich zu dem vom Detektor 2.1, der in der x-y- Ebene angeordnet ist und das Bild des Fingers 1 in z-Richtung erfasst, das durch Auflegen auf einen Sensor oder vorzugsweise durch Abbildung entsteht, gleichzeitig dieser Finger aus einem anderen Blickwinkel erfasst. Vorzugsweise bilden die Aufnahmerichtungen, aus denen das Objekt betrachtet wird, einen Winkel von 90 Grad und liegen in einer Ebene. Das bedeutet, dass die in Figur 1 dargestellten Winkel $\varphi$ und $\delta$ zwischen Aufnahmerichtung und eine durch die Fingerachse als y-Achse gehende Koordinatenrichtung 90° betragen. Ein zweites Bild wird vom Detektor 2.2, der in der y-z-Ebene angeordnet ist, in x- Richtung aufgenommen. Die Funktionswerte werden mit in einer Datenbank gespeicherten Daten von Referenzfunktionen verglichen, die eine gleiche Datenstruktur aufweisen Die Referenzfunktionen lauten dann

$R_{xy}$ (x, y, $m_{xy}$) für das Referenzbild in der x-y-Ebene, mit dem das vom Detektor 2.1 in der x-y-Ebene aufgenommene Bild $F_{xy}$ übereinstimmen muss

und

$R_{yz}$ (z, y, $m_{yz}$) für das Referenzbild in der y-z-Ebene, mit dem das vom Detektor 2.2 in der y-z-Ebene aufgenommene Bild übereinstimmen muss.

Das Objekt wird als richtig erkannt, wenn für $F_{xy}$ und $R_{xy}$ sowie für $F_{yz}$ und $R_{yz}$ jeweils gleichzeitig eine ausreichende Datenmenge, beispielsweise 90 %, übereinstimmt.

Die Abbildungen der Hautleisten können durch Erkennungsfunktionen der Art F (x, y, z, m) beschrieben werden. Für die in Figur 1 dargestellten Anordnung beschreibt die Funktion

$$F_{xy} (x, y, m_{xy})$$

das vom Detektor 2.1 in der x-y-Ebene aufgenommene Bild und die Funktion

$$F_{yz} (z, y, m_{yz})$$

das vom Detektor 2.2 in der y-z-Ebene aufgenommene Bild,
wobei $m_{xy}$ und $m_{yz}$ charakteristische Erkennungsmerkmale von Hautpunkten in den jeweiligen Ebenen beschreiben.

In **Figur 2** sind zwei Abbildungen von Hautleisten eines zu prüfenden Fingers dargestellt.

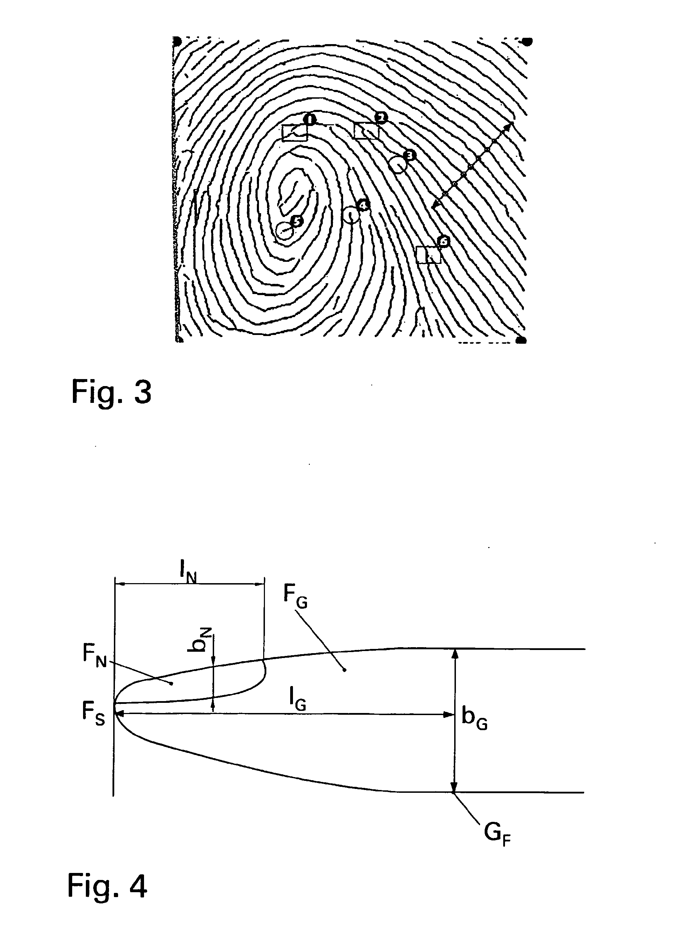

Die Auswertung der Merkmale m kann mit der in **Figur 3** gezeigten Methode, bei der die Erkennungsmerkmale mit Hilfe der Minutienbeziehungen nach FBI/NIST ausgewertet werden, erfolgen. Hierbei werden an diskreten Stellen besondere Merkmale der Hautleisten ausgewertet, beispielsweise Bifurkationen. Im dargestellten Fall erfolgt dies an den Punkten 1 bis 6.

**Figur 4** erläutert für ein Fingerglied charakteristische Parameter, die zur Beschreibung einer Profilfunktion mit gegenüber den oben erläuterten Datensätzen, mit denen Minutienbeziehungen beschrieben werden, einen sehr viel geringeren Datenumfang benötigen und trotzdem für eine sichere Beschreibung der individuellen Daten eines Fingers geeignet sind. Hierzu werden diskrete geometrische Strukturmerkmale, wie die Dicke des Fingers an einer bestimmten Stelle eines Koordinatensystems, der Ansatz des Nagelbettes und dergleichen verwendet.

Im dargestellten Fall dienen hierzu Größen, welche die geometrische Gestalt des vorderen Fingergliedes beschreiben. Dieses Glied reicht von der Fingerspitze FS bis zur Gliedfalte GF. Die zu seiner Charakterisierung verwendeten Größen sind:

- die Gliedlänge $l_G$ und Gliedbreite $b_G$,
- die Länge des Nagels $l_N$ und die Breite des Nagels $b_N$
- die Projektionsfläche des Gliedes $F_G$ und die Projektionsfläche des Nagelbettel $F_N$,

oder aus diesen Größen abgeleitete Koeffizienten, wie beispielsweise

$$b_G/l_G, \quad F_G/l, \quad F_N/l, \quad F_G/b_G, \quad F_N/b_N, \quad F_B/b_G l_G \text{ oder } F_N/b_G l_G.$$

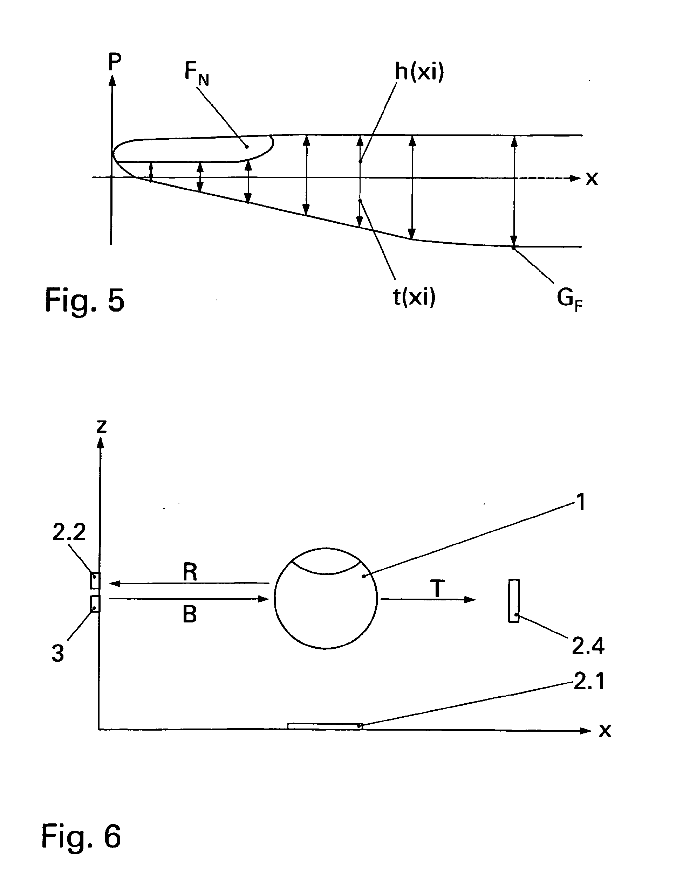

In **Figur 5** ist eine Möglichkeit zur Erfassung der Profilfunktion als zweidimensionale Information gezeigt, bei der Koordinatenwerte der äußeren Begrenzung des Fingergliedes biometrische Merkmale liefern. Hierzu sind besonders die Abstände von einer Bezugskoordinate x geeignet. Dies können beispielsweise der Höhenabstand h(x) der oberen Fingerbegrenzung von der Bezugskoordinate an der Stelle x oder der Tiefenabstand t(x) der unteren Fingerbegrenzung von der Bezugskoordinate an der Stelle x sein. Zusätzlich können auch Parameter einer Nagelbettbeschreibung einbezogen werden.

**Figur 6** zeigt eine Ausführungsform, die eine sichere Kontrolle auch für den Fall ermöglicht, in dem es einem Unberechtigten gelingen sollte, die oben beschriebenen Verfahren zu überwinden, beispielsweise durch einen Kunstfinger mit identischen geometrischen Merkmalen. Dies gelingt durch eine spektroskopische und/oder streulichtspektroskopische Auswertung, indem lateral von der Lichtquelle 3 ausgehende Beleuchtungsstrahlen B auf den Finger 1 gerichtet werden und der reflektierte Lichtanteil R und der transmissive Lichtanteil T spektroskopisch und/oder streulichtspektroskopisch ausgewertet werden. Zur Auswertung des reflektierten Lichtanteils R dient der Lichtdetektor 2.2 und zur Auswertung des transmissiven Lichtanteils T der Streulichtdetektor 2.4.

Diese Anordnung kann sowohl als zusätzliche Komponente als auch als eigenständige Kontrollanordnung vorgesehen werden.

Vorteilhaft werden hierzu Lichtwellenlängen von ca. 678 nm und 808 nm verwendet.

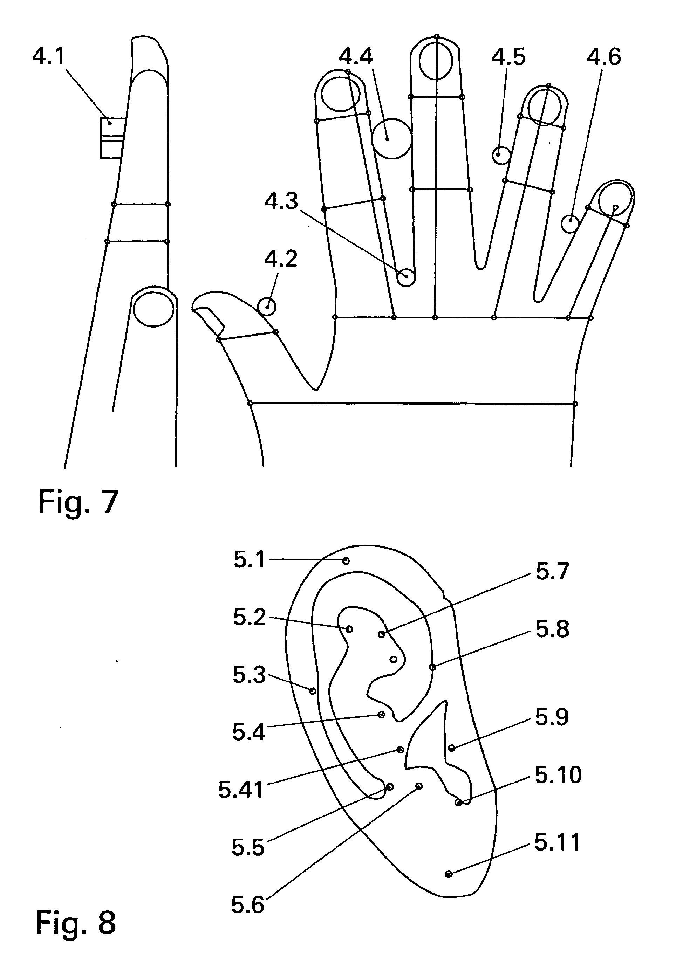

**Figur 7** erläutert eine Möglichkeit zur definierten Fixierung einer zu kontrollierenden Hand. An der dargestellten Einrichtung sind eine Reihe von Fixierung selementen 4 angeordnet, wobei mit dem Element 4.1 die Höhenfixierung und mit den Elementen 4.2 ... 4.6 die seitliche Fixierung erfolgt. Die für die Ermittlung der Abbildungen an den relevanten Fingerteilflächen verwendeten und hier nicht dargestellten Sensoren befinden sich unterhalb der Hand. Wie oben erwähnt, können hierzu sowohl berührende als auch berührungslos abtastende Sensoren verwendet werden.

**Figur 8** zeigt am Beispiel eines menschlichen Ohres charakteristische Merkmale, mit denen die Authentizität eines Gesichtes überprüft werden kann. Form und Größe von Teilen des Ohres sind besonders geeignet, Personen zu kennzeichnen. Als besonders geeignete Merkmale hierfür können verwendet werden: die Außenleiste (Helix) 5.1, die Innenleiste (Anthelix) 5.2, die Längsfurche 5.3, die Muschel 5.4, mit ihrem oberen (Cymba) und dem unteren Teil (Cavum) 5.4.1, die Schrägfurche (Sulcus obliquus) 5.5, der hintere Höcker (Antitragus) 5.6, die Dreiecksgrube (Fossa triangularis) 5.7, der Schenkel der Außenleiste (Crus helicis) 5.8, der vordere Höcker (Tragus) 5.9, der Zwischenhöckereinschnitt (Insicura intertragica) 5.10 und das Läppchen (Lehulus auriculan) 5.11.

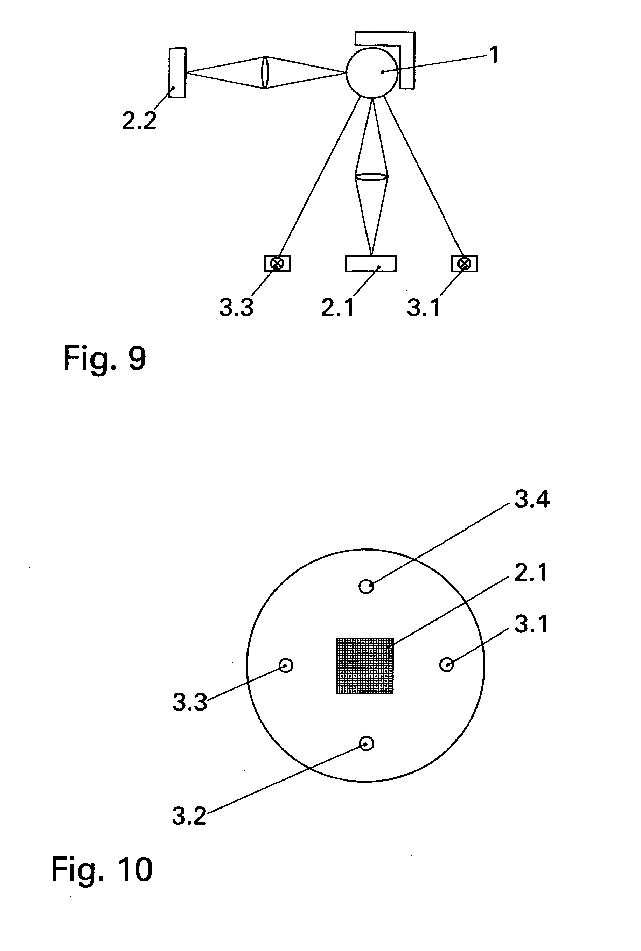

In den **Figuren 9 und 10** ist eine Anordnung dargestellt, mit der durch zusätzliche punktförmige Beleuchtung eine Überprüfung der Authentizität des zu untersuchenden Objektes erfolgt. Die Unterscheidung, ob es sich um ein authentisches Objekt, also einen lebenden Finger, oder um ein Nachbildung handelt, erfolgt dadurch, dass eine zusätzliche punktförmige Beleuchtung von ausgewählten Punkten auf dem Finger, die auf dem CMOS-Array des Sensors 2.1 und /oder 2.2 zusätzlich abgebildet werden. Dabei wird die Erscheinung ausgenutzt, dass sich bei einem authentischen Finger das Lichtrückstreuverhalten gegenüber demjenigen in Falsifikaten/Imitaten auf Grund unterschiedlicher Lichtverläufe in den Objekten unterscheiden. Die Erkennung von Imitaten gelingt damit relativ einfach, da diese von Hautgewebe abweichende spektrale Rückstreueigenschaften aufweisen.

Ein großer Teil an Imitaten kann dadurch zurückgewiesen werden, dass neben den charakteristischen Fingerlinien weitere Eigenschaften der Hand/des Fingers betrachtet werden. Hier wird das Streuverhalten von sichtbarem und infrarotem Licht in der Haut ausgewertet.

Licht dringt in die Haut ein und wird in verschiedenen Tiefen gestreut. Die Eindringtiefe ist abhängig von der Gewebestruktur, der Wellenlänge und der Absorption. Damit ergibt sich für das wieder austretende Licht eine starke Farbabhängigkeit. Blaues Licht dringt wenig in die Haut ein, damit ergibt sich bei punktförmiger Bestrahlung ein kleiner Streuhof, während bei rotem Licht mit großer Eindringtiefe ein großer Streuhof entsteht.

Die optischen Eigenschaften von Gewebe sind über den gesamten Spektralbereich schwer zu imitieren. Auch ist der Volumeneffekt, d.h. das Streuverhalten von Licht in der Tiefe des Gewebes nur schwierig nachzubilden.

Bei der vorliegenden Erfindung werden die gemessenen, charakteristischen Streueigenschaften von Licht im sichtbaren und infraroten Spektralbereich für den Nachweis von lebendem Gewebe genutzt.

Eine vorteilhafte Ausführung sieht vor, die Anordnung als eigenständiges Modul auszuführen, das mit einer ringförmigen oder zumindest mit einer paarweisen Anordnung einer oder mehrerer Lichtquellen ausgerüstet ist, welche den Finger punktförmig beleuchten. Die Beleuchtung kann direkt oder über eine Optik erfolgen. Die rückgestreute Intensitätsverteilung wird beispielsweise mit einer CCD- oder einer CMOS-Kamera ausgewertet.

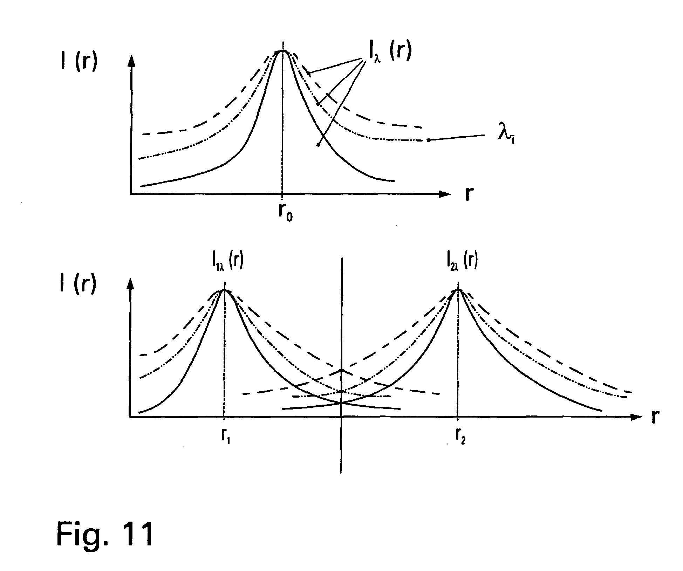

**Figur 11** zeigt Beispiele für den Intensitätsverlauf der Helligkeiten an punktförmig beleuchteten Stellen eines Fingers. Bei der Auswertung wird zunächst der Ort der maximalen Intensität des von den Lichtquellen 3.1 bis 3.4 erzeugten Helligkeitsverlaufs $I_{max\,1}$ $(\lambda_i,)$ bis $I_{max\,4}$ $(\lambda_i,)$ festgestellt und anschließend die Intensität des rückdiffundierten Lichts an dem Ort bestimmt, der im Mittelpunkt zwischen den Orten maximaler Intensität $P(\lambda_i, max)$ liegt. Der so ermittelte Mittelwert wird zur Auswertung herangezogen.

Da die Intensitätsverläufe in Abhängigkeit von den Wellenlängen $\lambda i$ des Lichtes der Lichtquellen 3.i verschieden sind, können einem "lebenden" Finger einer Person wellenlängenspezifische Kennwerte zugeordnet werden. Je mehr Spektralbereiche für die Auswertung zur Anwendung kommen, um so höher ist die Sicherheit, mit der Fälschungen aufgrund der zusätzlichen Unterscheidungsmerkmale erkannt werden.

Da die Absorption von Licht in sauerstoffreichem Blut sich von derjenigen in sauerstoffarmem Blut unterscheidet, können insbesondere für die oben beschriebene Lebenderkennung Lichtquellen mit ca. $\lambda_1$ = 678 nm und mit ca. $\lambda_2$ = 835 nm genutzt werden. Bei Beleuchtung mit $\lambda_1$ ergibt sich die größte Empfindlichkeit für die Unterscheidung zwischen sauerstoffreichem und sauerstoffarmem Blut. Dies kann vorteilhaft zum Nachweis eines lebenden Objektes genutzt werden. Bei Beleuchtung mit $\lambda_2$ ist kein Unterschied festzustellen.

Eine Erhöhung der Nachweissicherheit kann auch erreicht werden, indem die Lichtquellen pulskodiert geschaltet werden und synchron dazu die Bildauswertung erfolgt.

BEZUGSZEICHENLISTE

1   Objekt (Finger)

2   Lichtdetektor
    2.1 erster Lichtdetektor in Ebene xy
    2.2 zweiter Lichtdetektor in Ebene zy
    2.3 dritter Lichtdetektor in Ebene zx
    2.4 Streulichtdetektor

3   Lichtquelle
    3.1 ... 3.4 neben einen Lichtdetektor positionierte Licht-Quellen

4   Fixierungselemente
    4.1 Element zur Höhenfixierung
    4.2 ... 4.6 Elemente zur seitlichen Fixierung

B    Beleuchtungsstrahlengang

R    reflektierter Lichtanteil

T    transmissiver Lichtanteil

I    Intensitätsverlauf der Helligkeit

FS    Fingerspitze

GF    Gliedfalte

N    Nagelbett

$F_G$    Fläche des Gliedes

$F_N$    Fläche des Nagelbettes

$l_G$    Gliedlänge

$b_G$    Gliedbreite

l    Länge des Nagels

$b_N$    Breite des Nagels

h(x)    Höhenabstand der oberen Fingerbegrenzung an der Stelle x

t(x)    Tiefenabstand der unteren Fingerbegrenzung an der Stelle x

**Patentansprüche**

1.  Verfahren zur Erkennung biometrischer Daten, insbesondere zur Erkennung von Finger- und Gesichtsmerkmalen von Personen, bei dem ein Objekt (1) von einer Lichtquelle (3) beleuchtet und durch optische Abtastung gleichzeitig aus mindestens zwei verschiedenen Aufnahmerichtungen erfasst wird und mittels digitaler Bildverarbeitung aus mindestens zwei Abbildungen numerische Kennwerte ermittelt und mit einem aus ebenfalls mehreren Abbildungen gewonnenem Referenzmodell verglichen werden, wobei das Objekt (1) als richtig identifiziert wird, falls die aus den Abbildungen gewonnenen Daten gleichzeitig bis auf jeweils vorherbestimmte Toleranzen mit den Daten des Referenzmodells übereinstimmen, **dadurch gekennzeichnet, dass** ein lateral von einer Lichtquelle (Q) ausgehender Beleuchtungsstrahlengang (B) auf das Objekt gerichtet wird und sowohl ein reflektierter Anteil (R) als auch ein transmissiver Anteil (T) spektroskopisch und/oder streulichtspektroskopisch ausgewertet werden, wobei die Auswertung mit Licht der Lichtwellenlängen 678 nm und ca. 808 nm bis 835 nm erfolgt.

2. Verfahren nach Anspruch 1, **dadurch gekennzeichnet, dass** charakteristische Erkennungsmerkmale (mF) der Hautleisten eines Referenzobjektes in einer Referenzfunktion R (z, y, mF) erfasst und mit einer Erkennungsfunktion F (z, y, mF), welche charakteristische Erkennungsmerkmale (mF) der Hautleisten des zu prüfenden Objektes (1) beschreibt, verglichen werden.

3. Verfahren nach Anspruch 1 oder 2, **dadurch gekennzeichnet, dass** von mindestens einer der Abbildungen diskrete geometrische Strukturmerkmale ausgewertet werden.

4. Verfahren nach Anspruch 3, **dadurch gekennzeichnet, dass** zur Beschreibung eines Fingers Größen verwendet werden, welche die geometrische Gestalt des vorderen Fingergliedes beschreiben.

5. Verfahren nach Anspruch 4, **dadurch gekennzeichnet, dass** zur Charakterisierung des vorderen Fingergliedes die Parameter Gliedlänge $l_G$, Gliedbreite $b_G$, Länge des Nagels $l_N$, Breite des Nagels $b_N$, Projektionsfläche des Gliedes $F_G$, Projektionsfläche des Nagelbettel $F_N$ oder aus diesen Größen abgeleitete Koeffizienten einzeln oder in Kombination verwendet werden.

6. Verfahren nach Anspruch 3, **dadurch gekennzeichnet, dass** zur Beschreibung eines Gesichtes eine Frontalaufnahme und eine seitliche Aufnahme, aus der ein Ohr mindestens teilweise erkennbar ist, verwendet werden.

7. Verfahren nach einem der vorhergehenden Ansprüche, **dadurch gekennzeichnet, dass** auf das Objekt (1) ein Lichtspalt oder -raster projiziert wird, so dass der projizierte Spalt auf der räumlichen Oberfläche des Objektes (1) eine Kontur bildet, dessen Abbildung eine Aussage über die dreidimensionale Form des Objektes (1) ermöglicht, wobei die Beleuchtung des Lichtspaltes oder -rasters mit Licht einer Wellenlänge erfolgt, die von der Wellenlänge; welche zur Beleuchtung der Hauptabbildung verwendet wird, verschiedenen ist, und das Bild des Rasters oder Lichtspaltes aufgrund der anderen Lichtfarbe mit einer Kamera selektiv erfasst wird und durch Kennzeichnung der Kontur eines Teilbereiches des Objektes (1) als weiterer Parameter für die Erkennung der Übereinstimmung des Objektes (1) mit dem Referenzobjekt dient.

8. Verfahren nach einem der vorhergehenden Ansprüche, **dadurch gekennzeichnet, dass** zur Erhöhung der Fälschungssicherheit das Objekt mit zusätzlichen Lichtquellen im sichtbaren und/oder infraroten Spektralbereich an mindestens zwei Stellen punktförmig beleuchtet und die Intensität des aus dem Objekt (1) rückdiffundierten Lichtes an diesen Punkten gemessen und mit einem Referenzwert verglichen wird.

9. Verfahren nach Anspruch 8, **dadurch gekennzeichnet, dass** zunächst der Ort der maximalen Intensität für diese Punkte ermittelt und aus dem Wert von mindestens zwei Intensitätsschwerpunkten ein Mittelwert ermittelt wird.

10. Verfahren nach einem der vorhergehenden Ansprüche, **dadurch gekennzeichnet, dass** zum Einschreiben eines Referenzdatensatzes das Objekt mehrfach abgebildet wird, indem es schrittweise um eine durch das Objekt verlaufende Achse gedreht wird und in mehreren diskreten Stellungen jeweils zwei Abbildungen gespeichert und zu einem oder mehreren dreidimensionalen Modellen zusammengefügt werden.

11. Verfahren nach einem der vorhergehenden Ansprüche, **dadurch gekennzeichnet, dass** die Lichtquellen pulskodiert geschaltet werden und synchron dazu die Auswertung der Signale mit einem Bildempfänger-Array erfolgt.

12. Vorrichtung zur Erkennung biometrischer Daten, insbesondere zur Erkennung von Finger- und Gesichtsmerkmalen von Personen, die ein Objekt (1) mit einer Lichtquelle (3) beleuchtet und durch optische Abtastung gleichzeitig aus mindestens zwei verschiedenen Aufnahmerichtungen erfasst und mittels digitaler Bildverarbeitung aus mindestens zwei Abbildungen numerische Kennwerte ermittelt und mit einem aus ebenfalls mehreren Abbildungen gewonnenem Referenzmodell vergleicht, wobei sie das Objekt (1) als richtig identifiziert, falls die aus den Abbildungen gewonnenen Daten gleichzeitig bis auf jeweils vorherbestimmte Toleranzen mit den Daten des Referenzmodells übereinstimmen, **dadurch gekennzeichnet, dass** ein lateral von einer Lichtquelle (Q) ausgehender Beleuchtungsstrahlengang (B) auf das Objekt gerichtet ist und die Vorrichtung sowohl einen reflektierten Anteil (R) als auch einen transmissiven Anteil (T) spektroskopisch und/oder streulichtspektroskopisch mit Licht der Lichtwellenlängen 678 nm und ca. 808 nm bis 835 nm auswertet.

**13.** Vorrichtung nach Anspruch 12, **dadurch gekennzeichnet, dass** die Vorrichtung mindestens eine sichtbares und/ oder infrarotes Licht aussendende Beleuchtungseinrichtung sowie mindestens zwei Lichtdetektoren (2) zur Aufzeichnung zweier unabhängiger Bilder enthält.

**14.** Vorrichtung nach Anspruch 13, **dadurch gekennzeichnet, dass** die Lichtdetektoren (2) in mindestens einem Bildempfänger-Array angeordnet sind.

**15.** Vorrichtung nach Anspruch 13 oder 14, **dadurch gekennzeichnet, dass** die Kamera ein CMOS-Array enthält, in dem mindestens zwei Bereiche für die Aufnahme getrennter Abbildungen angeordnet sind und vor der Kamera eine Einrichtung zur optischen Zusammenführung zweier Abbildungen angeordnet ist.

**16.** Vorrichtung nach einem der Ansprüche 13 bis 15, **dadurch gekennzeichnet, dass** mindestens zwei Lichtquellen (3) paarweise oder ringförmig um den Lichtdetektor (2) angeordnet sind, die das Objekt (1) punktförmig beleuchten und die rückgestreute Intensitätsverteilungen mit dem Lichtdetektor (2) erfasst wird.

**17.** Vorrichtung nach Anspruch 16, **dadurch gekennzeichnet, dass** die vom Objekt (1) rückgestreute Intensitätsverteilung mit mehreren elektronischen Kameras gleichzeitig erfasst wird.

**18.** Vorrichtung nach Anspruch 16, **dadurch gekennzeichnet, dass** die vom Objekt rückgestreute Intensitätsverteilung mit einer elektronischen Kamera erfasst wird, wobei von der Kamera mehrere Bilder aus verschiedenen Aufnahmerichtungen erfasst werden, die durch strahlenvereinigende optische Elemente zusammengeführt werden.

**19.** Vorrichtung nach einem der Ansprüche 16 bis 18, **dadurch gekennzeichnet, dass** die zusätzlichen Lichtquellen (3) zur punktförmigen Beleuchtung als eigenständiges Modul an der Vorrichtung angeordnet sind.

**Claims**

**1.** Method for recognition of biometric data, in particular for recognition of characteristics of fingers and of faces of persons, wherein an object (1) is illuminated by a light source (3) and is acquired simultaneously from at least two different imaging directions by optical scanning and numerical reciprocals are acquired by means of digital image processing from at least two images, wherein the numerical reciprocals are compared to a reference model acquired from also several images, wherein the object (1) is recognized to be right if the acquired data gained from the images are simultaneously in concordance with the data of the reference model apart from predetermined tolerances, **characterized in that** an illumination path (B) coming laterally from a light source (Q) is directed onto the object and both a reflected portion (R) and a transmitted portion (T) are analyzed spectroscopically and/or scattered-light-spectroscopically, wherein the analysis is carried out using light of the wavelengths 678 nm and about 808 nm to 835 nm.

**2.** Method according to claim 1, **characterized in that** characteristic recognition attributes ($m_F$) of the dermal ridges of a reference object are acquired in a reference function $R(z, y, m_F)$ and compared to a recognition function $F(z, y, m_F)$ which describes characteristic recognition attributes ($m_F$) of the dermal ridges of the object (1) to be checked.

**3.** Method according to claim 1 or 2, **characterized in that** discrete geometric structure attributes are analyzed from at least one of the images.

**4.** Method according to claim 3, **characterized in that**, for description of a finger, entities are used which describe the geometric shape of the front phalanx of the finger.

**5.** Method according to claim 4, **characterized in that** for characterizing the front phalanx the parameters length of the phalanx $l_G$, width of the phalanx $b_G$, length of the nail $l_N$, width of the nail $b_N$, projected area of the phalanx $F_G$, projected area of the nailbed $F_N$ or coefficients deduced from these entities are used singly or in combination.

**6.** Method according to claim 3, **characterized in that**, for description of a face, a front image and a lateral image from which an ear is at least partially visible are used.

7. Method according to one of the preceding claims, **characterized in that** a light slit or raster is projected onto the object (1) in such a way that the projected slit forms a contour on the spatial surface of the object (1) whose image allows a statement about the three-dimensional shape of the object (1), wherein the illumination of the light slit or raster is carried out using light of a wavelength which is different from the wavelength used for illumination of the main image and wherein the image of the light raster or slit is selectively acquired by a camera due to the different light colour and, by characterizing the contour of a partial area of the object (1), serves as an additional parameter for recognizing the concordance of the object (1) with the reference object.

8. Method according to one of the preceding claims, **characterized in that**, for an increase of the fraud resistance, the object is illuminated punctually in at least two locations using additional light sources in the visible and/or infrared spectral range and that the intensity of the light diffused back from the object (1) is measured at these locations and compared to a reference value.

9. Method according claim 8, **characterized in that** first the place of maximal intensity is acquired for these points and a mean value is calculated from the value of at least two intensity centroids.

10. Method according to one of the preceding claims, **characterized in that** the object is multiply imaged for writing of a reference data set by skewing it stepwise around an axis running through the object and that two images are saved in several discrete situations respectively and are joined together to one or several three-dimensional models.

11. Method according to one of the preceding claims, **characterized in that** the light sources are switched in a pulse-coded manner and, synchronously, the analysis of the signals is performed by means of an image receiver array.

12. Apparatus for recognition of biometric data, in particular for recognition of characteristics of fingers and of faces of persons, the apparatus illuminating an object (1) by a light source (3), acquiring the object (1) simultaneously, from at least two different imaging directions by optical scanning, acquiring numerical reciprocals by means of digital image processing from at least two images, and comparing the numerical reciprocals to a reference model acquired from also several images, wherein the apparatus recognizes the object (1) to be right if the acquired data gained from the images are simultaneously in concordance with the data of the reference model apart from predetermined tolerances, **characterized in that** an illumination path (B) coming laterally from a light source (Q) is directed onto the object and that the apparatus analysis both a reflected portion (R) and a transmitted portion (T) spectroscopically and/or scattered-light-spectroscopically, using light of the wavelengths 678 nm and about 808 nm to 835 nm.

13. Apparatus according to claim 12, **characterized in that** the apparatus comprises at least one illumination facility which emits visible and/or infrared light as well as at least two light detectors (2) for taking two independent images.

14. Apparatus according to claim 13, **characterized in that** the light detectors (2) are arranged in at least one image receiver array.

15. Apparatus according to claim 13 or 14, **characterized in that** the camera comprises a CMOS array in which at least two areas are arranged for taking separated images and that a facility for optical merging of two images is arranged in front of the camera.

16. Apparatus according to one of the claims 13 to 15, **characterized in that** at least two light sources (3) punctually illuminating the object (1) are arranged in a pairwise or ring-shaped manner around the light detector (2) and that the backscattered intensity distribution is acquired using the light detector (2).

17. Apparatus according to claim 16, **characterized in that** the intensity distribution scattered back from the object (1) is acquired simultaneously by several electronic cameras.

18. Apparatus according to claim 16, **characterized in that** the intensity distribution scattered back from the object (1) is acquired by an electronic camera, wherein several images are acquired by the camera from different directions of taking which are merged by beam-combining optical elements.

19. Apparatus according to one of the claims 16 to 18, **characterized in that**, for punctual illumination, the additional light sources (3) are arranged at the apparatus in form of an independent module.

**Revendications**

1. Procédé pour la reconnaissance de données biométriques, en particulier pour la reconnaissance de caractéristiques digitales et de caractéristiques du visage de personnes, où un objet (1) est éclairé par une source lumineuse (3) et saisi par balayage optique simultané exécuté par au moins deux dispositifs de prise de vue différents, où des valeurs numériques caractéristiques sont déterminées par traitement numérique d'au moins deux images et comparées à un modèle de référence également obtenu à partir de plusieurs images, où l'objet (1) est identifié comme correct si les données obtenues à partir des images correspondent simultanément, à l'exception de tolérances prédéfinies, aux données du modèle de référence, **caractérisé en ce qu'**un rayonnement d'éclairage (B) s'écoulant latéralement d'une source lumineuse (Q) est dirigé sur l'objet et qu'une part réfléchie (R) ainsi qu'une part transmissive (T) sont analysées par spectroscopie et/ou par spectroscopie en lumière diffuse, l'analyse étant effectuée avec une lumière de longueur d'onde de 678 nm, d'une part, et de longueur d'onde comprise entre 808 nm et 835 nm env., d'autre part.

2. Procédé selon la revendication 1, **caractérisé en ce que** des caractéristiques de reconnaissance typiques (mF) des crêtes dermiques d'un objet de référence sont saisies dans une fonction de référence R(z, y, mF) et comparées à une fonction de reconnaissance F(z, y, mF) décrivant des caractéristiques de reconnaissance typiques (mF) des crêtes dermiques de l'objet (1) à examiner.

3. Procédé selon la revendication 1 ou la revendication 2, **caractérisé en ce que** des caractéristiques géométriques structurelles discrètes d'au moins une des images sont analysées.

4. Procédé selon la revendication 3, **caractérise en ce que** des grandeurs décrivant la forme géométrique de la dernière phalange sont utilisées pour la description d'un doigt.

5. Procédé selon la revendication 4, **caractérisé en ce que** les paramètres que sont la longueur de phalange $l_G$, la largeur de phalange $b_G$, la longueur d'ongle $l_N$, la largeur d'ongle $b_N$, la surface de projection de la phalange $F_G$, la surface de projection du lit de l'ongle, $F_N$, ou des coefficients dérivés de ces grandeurs sont utilisés isolément ou en combinaison pour la caractérisation de la dernière phalange.

6. Procédé selon la revendication 3, **caractérisé en ce qu'**une prise de vue frontale et une prise de vue latérale où une oreille est au moins partiellement reconnaissable sont utilisées pour la description d'un visage.

7. Procédé selon l'une des revendications précédentes, **caractérisé en ce qu'**un rai de lumière ou une trame lumineuse sont projetés sur l'objet (1), de manière que le rai projeté sur la surface en relief de l'objet (1) forme un contour dont l'image permette une assertion relative à la forme tridimensionnelle de l'objet (1), l'éclairage du rai de lumière ou de la trame lumineuse étant effectué avec une lumière de longueur d'onde différente de la longueur d'onde utilisée pour l'éclairage de l'image principale, et **en ce que** l'image de la trame ou du rai de lumière est sélectivement saisie par une caméra sur la base de la couleur lumineuse différenciée et sert comme autre paramètre pour la reconnaissance de la concordance de l'objet (1) avec l'objet de référence par marquage du contour d'une zone partielle de l'objet (1).

8. Procédé selon l'une des revendications précédentes, **caractérisé en ce que**, pour élever la sécurité contre les falsifications, l'objet est ponctuellement éclairé sur au moins deux points par des sources lumineuses complémentaires dans.la plage spectrale visible et/ou infrarouge, et **en ce que** l'intensité de la lumière rétrodiffusée depuis l'objet (1) est mesurée sur lesdits points et comparée à une valeur de référence.

9. Procédé selon la revendication 8, **caractérisé en ce que** l'emplacement d'intensité maximale pour lesdits points est d'abord déterminé, et **en ce qu'**une valeur moyenne est déterminée à partir de la valeur d'au moins deux points d'intensité maximale.

10. Procédé selon l'une des revendications précédentes, **caractérisé en ce que** pour un enregistrement de référence, l'objet est représenté plusieurs fois en étant graduellement tourné autour d'un axe traversant l'objet, et **en ce que** deux images sont chaque fois mémorisées pour plusieurs positions discrètes, et assemblées en un ou plusieurs modèles tridimensionnels.

11. Procédé selon l'une des revendications précédentes, **caractérisé en ce que** les sources lumineuses sont codées par impulsions, et **en ce que** l'analyse des signaux est effectuée en synchronie avec un réseau de récepteur d'images.

**12.** Dispositif pour la reconnaissance de données biométriques, en particulier pour la reconnaissance de caractéristiques digitales et de caractéristiques du visage de personnes, où un objet (1) est éclairé par une source lumineuse (3) et saisi par balayage optique simultané exécuté par au moins deux dispositifs de prise de vue différents, où des valeurs numériques caractéristiques sont déterminées par traitement numérique d'au moins deux images et comparées à un modèle de référence également obtenu à partir de plusieurs images, où le dispositif identifie l'objet (1) comme correct si les données obtenues à partir des images correspondent simultanément, à l'exception de tolérances prédéfinies, aux données du modèle de référence, **caractérisé en ce qu'**un rayonnement d'éclairage (B) s'écoulant latéralement d'une source lumineuse (Q) est dirigé sur l'objet et **en ce que** le dispositif analyse une part réfléchie (R) ainsi qu'une part transmissive (T) par spectroscopie et/ou par spectroscopie en lumière diffuse, avec une lumière de longueur d'onde de 678 nm, d'une part, et de longueur d'onde comprise entre 808 nm et 835 nm env., d'autre part.

**13.** Dispositif selon la revendication 12, **caractérisé en ce que** le dispositif comprend au moins un dispositif d'éclairage émettant une lumière visible et/ou infrarouge, et au moins deux détecteurs de lumière (2) pour l'enregistrement de deux images indépendantes.

**14.** Dispositif selon la revendication 13, **caractérisé en ce que** les détecteurs de lumière (2) sont disposés dans au moins un réseau de récepteur d'images.

**15.** Dispositif selon la revendication 13 ou la revendication 14, **caractérisé en ce que** la caméra comprend un réseau CMOS, où sont prévus au moins deux champs pour la prise de vue d'images séparées, et **en ce qu'**un dispositif pour l'assemblage optique de deux images est disposé devant la caméra.

**16.** Dispositif selon l'une des revendications 13 à 15, **caractérisé en ce qu'**au moins deux sources lumineuses (3) sont disposées par paire ou en anneau autour du détecteur de lumière (2), éclairant ponctuellement l'objet (1), et **en ce que** la distribution d'intensité rétrodiffusée est saisie par le détecteur de lumière (2).

**17.** Dispositif selon la revendication 16, **caractérisé en ce que** la distribution d'intensité rétrodiffusée par l'objet (1) est simultanément saisie par plusieurs caméras. électroniques.

**18.** Dispositif selon la revendication 16, **caractérisé en ce que** la distribution d'intensité rétrodiffusée par l'objet est saisie par une caméra électronique, plusieurs images étant saisies par la caméra dans plusieurs directions de prise de vue et assemblées par des éléments optiques concentrateurs de rayonnements.

**19.** Dispositif selon l'une des revendications 16 à 18, **caractérisé en ce que** les sources lumineuses complémentaires (3) pour l'éclairage ponctuel sont disposées en tant que module indépendant.

Fig. 1

Fig. 2

# Fig. 3

# Fig. 4

P

$F_N$

h(xi)

x

t(xi)

$G_F$

## Fig. 5

z

2.2

R

B

1

T

2.4

3

2.1

x

## Fig. 6

4.1

4.4

4.5

4.6

4.3

4.2

# Fig. 7

5.1

5.2

5.3

5.4

5.41

5.5

5.6

5.7

5.8

5.9

5.10

5.11

# Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0359554 B1
- EP 1073988 B1
- DE 10123561 A
- DE 10128717 A